# EUROPEAN PATENT APPLICATION

(11) **EP 1 126 361 A1**
(43) Date of publication of application: **22.08.2001**
(21) Application number: 00410012.9
(22) Date of filing: 14.02.2000
(51) Int. Cl.: G06F 1/18, H05K 5/02

(54) **Electronic appliance having secured cable shroud**

(71) Applicant: Hewlett-Packard Company, A Delaware Corporation, Palo Alto, CA 94304 (US)
(72) Inventor: Allirot, Richard, 38700 Corenc (FR)
(74) Representative: Lloyd, Richard Graham

(57) **Abstract**

An electronic appliance, such as a personal computer, is described comprising: a housing having at least one external socket, and a cable shroud that is movable to and from a closed position in which closed position the cable shroud is disposed so as to prevent removal of a plug engaged in the socket, and a lock mechanism for locking the cable shroud in the closed position.

## Description

### Field of the Invention

The invention relates to the configuration of desktop computer systems and other similar types of electronic appliances.

### Background of the Invention

The popularity of personal computers has become such that their use is an everyday occurrence for much of the world's population. Whilst improvements have been, and continue to be, made to the user interfaces of personal computers in order to make them usable by a wider cross section of the population, personal computer systems themselves have also greatly increased in their internal complexity so that today most users are unfamiliar with the internal design and configuration of the computers that they use.

This, together with the increasingly ubiquitous nature of the Internet infrastructure and the services that are becoming available using it, is leading to the deployment of simpler, specialized computing devices that allow users to access applications at all times and on demand.

In consequence, research and development efforts relating to personal computer design are being directed to changing the nature of the desktop computer, at least for some applications, from being a relatively complex and unreliable, but flexible, assembly of interoperating components, such as processor, memory, sound subsystem, CD-ROM drive, network card etc, each having distinct functions, parameters and features to becoming a single, network-connected and reliable appliance, more akin to a telephone or television set than a microcomputer, whose internal make-up and functioning is completely invisible and irrelevant to the user.

The overall objective of such efforts is to remove complexity from the hands of the user in order to enable, ultimately, a more productive use of the technology by allowing users to focus on the task at hand rather than the tool.

One factor that has contributed to these developments is that computer systems and peripheral devices used therewith have become very small, compact and easy to move. Whilst this has many advantages it has also created some problems. For instance, one problem associated with compact and lightweight computer equipment is that it, and the data stored in it, is more easily stolen.

A basic measure that is usually taken is to secure the cover of a personal computer in order to protect information stored in the computer and to prevent unauthorised access to or removal of the components within the case. Personal computers are often provided with a key-operated lock mechanism for this purpose. Examples of such key operated locks can be found described in US 5548981 and US 5598323.

Other computer system configurations lend themselves well to the provision of a locking system to prevent unauthorised removal of certain system components. For instance, various ways have been proposed for locking portable computers to their associated docking stations - see for instance WO93/1540 and EP 0681244.

Peripheral devices that are attached to a system unit by flying leads represent a particularly vulnerable part of a computer system. Such devices can include not only low value system components such as keyboards and mice, but also higher value peripheral devices such as external storage drives, smart card readers, printers, display devices and even digital cameras and telephones.

Recent developments in 'plug and play' type bus systems, in which devices can be dynamically connected and disconnected without the bus system having to be restarted, has meant that it can be expected that a wider variety of pluggable and unpluggable devices will become available and that such devices will become more mobile within the computing environment as a whole. Such developments only increase the need for security measures to be provided to prevent unauthorised removal of such devices.

This latter problem is at least partially addressed by cable lock systems, such as that described in US-A-4669281 and US-A-5288241, that are operable using a key, although these can be mechanically complex or one-shot devices such as that described in US-A-4750898. Whilst many of these devices may be perfectly satisfactory as optional accessories for the PC aftermarket they would add significant extra cost to the system if they were to be supplied standardly with a personal computer.

### Summary of the Invention

The present invention mitigates the problems of the prior art by combining the functions of a cable lock and cable tidy in a single simple structure that is cheap to manufacture and that does not add significantly to the overall cost of the device with which is is used.

In brief, an electronic appliance, such as a personal computer, comprises a housing having at least one external socket, and a cable shroud that is movable to and from a closed position in which closed position the cable shroud is disposed so as to prevent removal of a plug engaged in the socket, and a lock mechanism - for instance a key operated lock - for locking the cable shroud in the closed position.

In at least a preferred embodiment, the housing comprises a recessed portion for receiving a removable device; and a movable closure member for enclosing the recessed portion. In this case, the lock mechanism is operable to prevent movement of the closure member to a position in which the removable device can be removed from the recessed portion. For instance, where the closure member is a sliding cover, the lock mechanism can comprise a lock member movable to and from a lock position in which the lock member prevents sliding of the cover. In this way, the need is avoided to provide a supplemental lock device for securing the shroud.

Of course, various type of cable management structures are known, but these generally have either a purely aesthetic function and do not contribute to the security of the system or are intended to be essentially permanent structures fixed in place using screws, bolts or similar fixings - see for instance the cable shroud described in US-A 5491796. The cable shroud of the present invention, on the other hand, conveniently combines providing an aesthetic appearance to the rear of the device with important security functions.

In preferred embodiments, the cable shroud is a simple one-piece plastics part comprising a plurality of rigid walls defining a cavity, and at least one opening for allowing a plurality of cables to exit the cavity. The cable shroud can comprise hook members for engaging corresponding slots provided to the rear of the housing. The simplicity of the structure means that no modifications are required to secure standard connectors, such as standard USB and standard DC power connectors, in the rear of the machine.

The invention find particular application to the protection of external sockets for plug and play-type bus connections to an external peripheral device. A further important application is to appliance-like personal computer configurations that employ an external power adapter. In this case the shroud serves to protect an external socket for receiving a cable from the external power adapter.

### Brief Description of the Invention

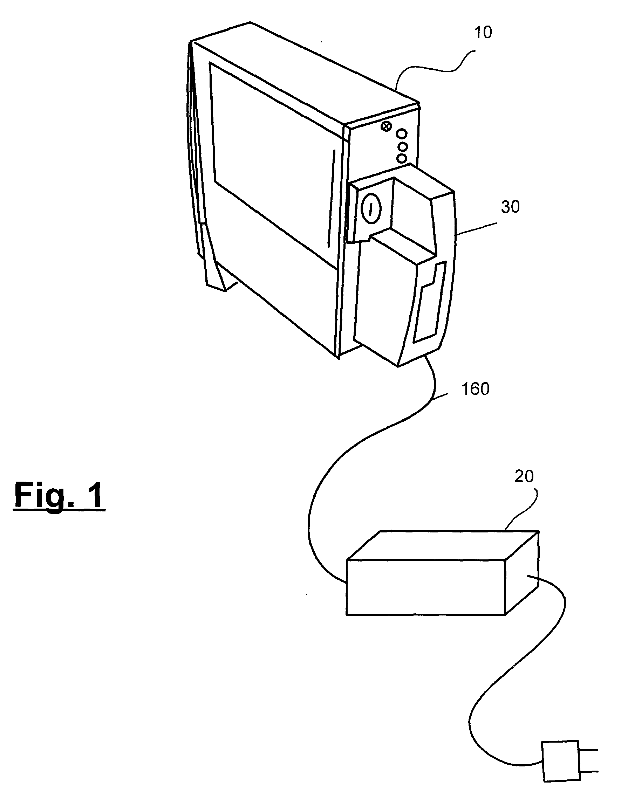

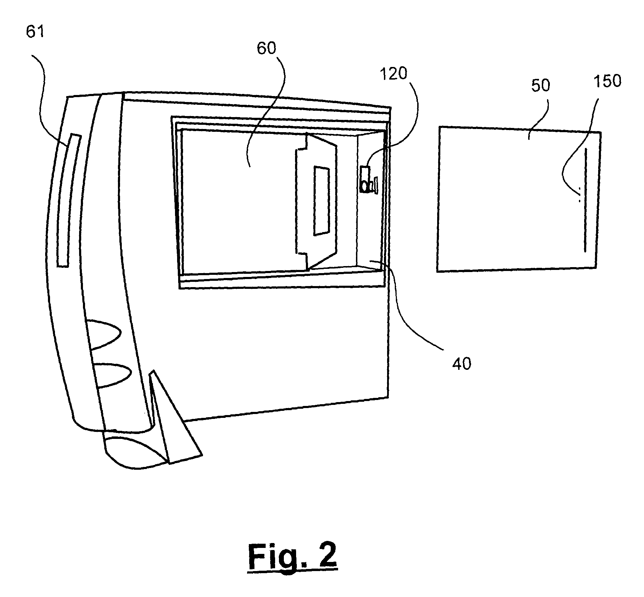

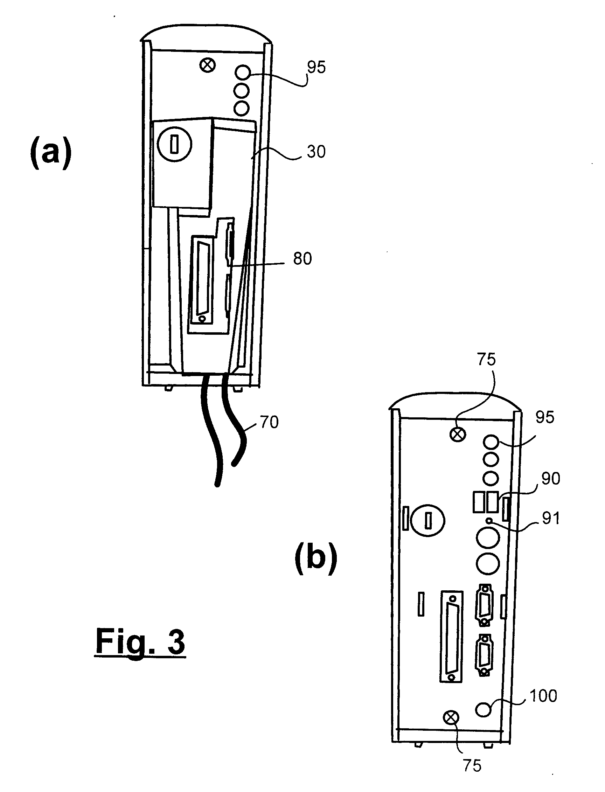

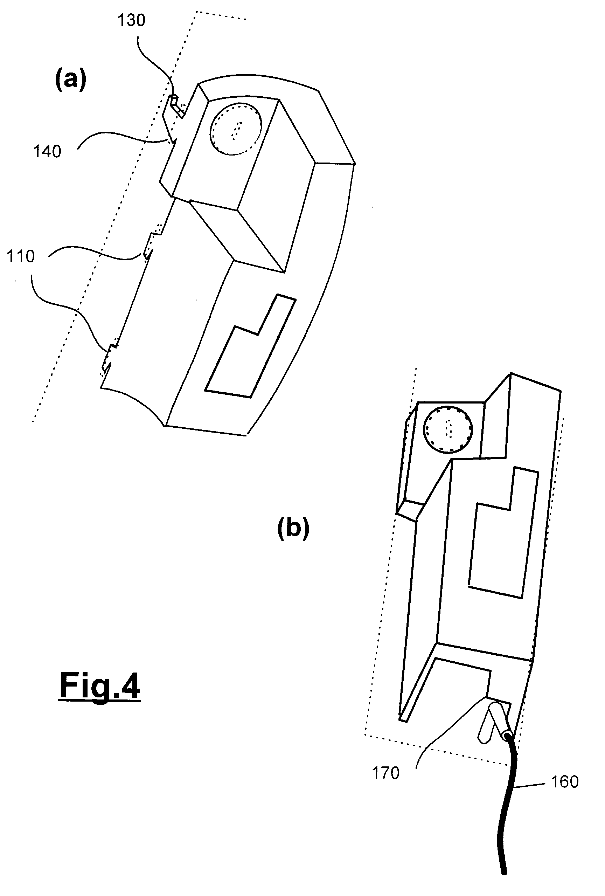

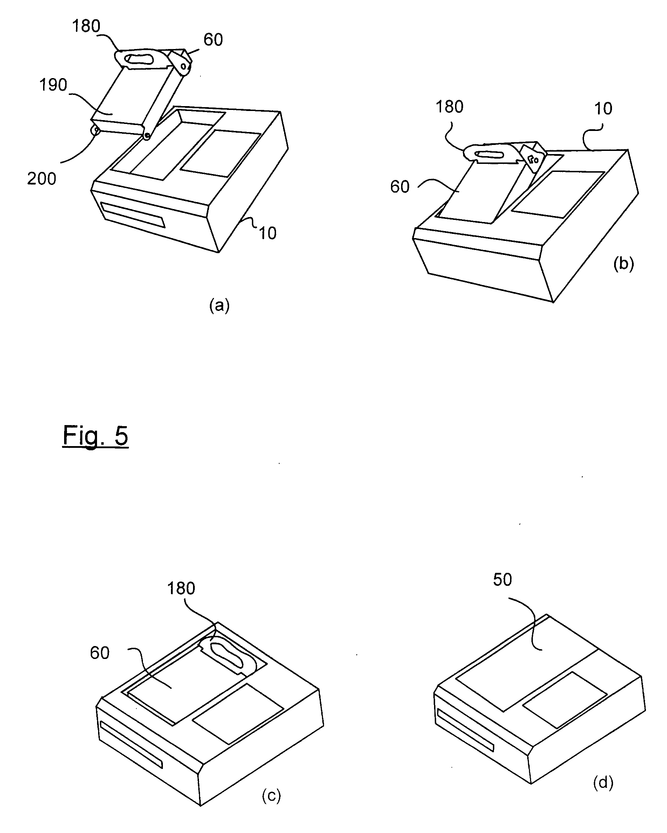

A personal computer embodying the invention will now be described, by way of non-limiting example, with reference to the accompanying drawings, in which
. **Figure 1** is a rear perspective view of a personal computer;
. **Figure 2** shows the personal computer of Fig 1 with a removable cover removed;
. **Figures 3(a) and 3(b)** are rear views of the personal computer with and without a cable shroud in place ;
. **Figures 4(a) and 4(b)** are upper and lower left side perspective views of the cable shroud;
. **Figure 5** shows a disk drive unit in a series of positions (a) to (d) being installed in the computer.

### Best Mode of Carrying out the Invention

Referring to Fig 1, there is shown a rear perspective view of an appliance-like desktop personal computer system unit 10 having a small form factor. System unit 10 is used in conjunction with conventional keyboard, display screen and mouse devices. An external power supply unit 20 provides low-voltage DC power to the computer through a flying lead 160. External power supply unit 20 is a conventional self-contained AC adapter of the type conventionally used with portable computers. The motherboard of the computer mounted within housing 10 includes suitable DC-DC conversion circuits for generating the various voltages required by the different components of the computer.

A removable cable shroud 30 serves to secure cables plugged into sockets on the rear face of the unit as will be described in more detail below.

Fig 2 shows the housing with the cable shroud 30 removed. As can be seen in Fig 2, the housing of unit 10 has a recessed portion 40, closed with a sliding cover 50. Recessed portion 40 is for receiving a removable disk drive data storage device 60. Computer 10 also includes an internal CD or DVD ROM drive 61.

Apart from the removable cover 50 and disk drive unit 60, the housing of computer 10 is sealed in the sense that it is not intended to be opened by the user and represents a single field replaceable unit which is simply replaced if it fails rather than being serviced on site. All optional and accessory components are connected to the computer via flying leads through sockets to the rear of the housing. If it is needed to replace the system unit, the user's programs and data, being stored in removable data storage device 60, can easily and transparently be transferred to a replacement system unit simply by removing the device 60 from the defective system unit and fitting the device in the replacement system unit.

For this reason the screws 75 that hold the housing together are provided with a tamper-evident seal that serves to indicate whether or not the casing has been opened. This seal is useful, for instance, for the purpose of determining the applicability of a warranty to the machine. The seal can take any suitable form, such as a sticker covering the screw or a patch of suitable paint over the screw.

It can therefore be seen that, excepting the keyboard, mouse, display and other optional cable-connected accessories, the system is made up of three field replaceable units - system unit 10, disk drive unit 60 and AC adapter 20. It will be appreciated that this simplifies considerably the task of providing maintainance and warranty support for such systems, thereby indirectly reducing their overall cost.

Very important to the practical usability of the unit 10 in corporate environments is cable shroud 30 that is removably fixed to the rear of the housing. Cable shroud 30 has two main functions to be described in more detail below. First, it prevents removal of plugs engaged in the sockets to the rear of the housing. Secondly, by covering and guiding cables plugged into the rear of the unit, it lends an aesthetic appearance to the rear of the computer.

The aesthetic function is all the more significant in a small form factor personal computer, since these are often located on a desktop in a customer service environment with limited space available. If a customer service representative that is using the computer is positioned so as to face a customer and use the computer at the same time, it is very likely that the customer will see the rear face of the computer and the multiplicity of cables that inevitably are plugged therein.

Figs 3(a) and 3(b) are rear views of the personal computer with and without cable shroud 30 in place. When in place, shroud 30 defines a number of apertures through which cables can pass freely. As can be seen in Fig 3(a), shroud 30 guides and routes cables 70 so that they exit the shroud in a generally downward direction from a downwardly facing opening in the shroud. In addition, a rearwardly facing aperture 80 is provided to allow stiff cables, such as those used to connect to conventional video, parallel and serial ports to exit the shroud without having to be bent.

Whilst neither the cables nor their connectors are engaged directly by the shroud, the size and shape of the apertures is chosen so that the plugs on the cables must be engaged in their respective sockets before the shroud is put into position. Once the shroud is in position, the plugs cannot be removed from their sockets without cutting the cables and a plug cannot be connected to an empty socket. For the reasons explained below, this feature is particularly important for cables that connected to USB ports 90 and for the DC power cable that is used to connect power supply 20 to unit 10.

The USB (Universal Serial Bus) is a serial bus with a rate of data transmission fast enough to support a variety of devices, including keyboards, mice, joysticks, printers, scanners, speakers, and floppy disk drives. USB is intended to replace the current array of keyboard, serial, and parallel connections using an industry standardized communications protocol. One USB feature, "hot-plugging," lets users attach or remove a peripheral device without having to shut down or restart their PC. No special software drivers need to be added or installed; The PC automatically detects the peripheral device and configures the necessary software.

Whilst this feature is generally very useful it does pose a security problem. First, it is expected that higher value devices, such as printers, scanners, digital cameras, and personal digital assistants, mobile telephones or other forms of mobile appliances will be attached to the computer system by such connections. Secondly, the automatic configuration of the bus allows some devices access to the data stored within the computer without having to have access to the user interface of the operating system (which can be password protected in a user's absense). For the above reasons, it is important both to prevent removal of USB devices that are already attached to the computer and also unauthorised attachment of USB devices to the computer. Of course, the same factors may apply to other types of 'plug and play' buses depending upon the security features established in the bus standards themselves.

Due to the use of an external power supply, unit 10 is particularly vulnerable to accidental removal of the DC power cable 160 because, unlike a portable computer, it does not contain an internal battery that would provide power in the event of accidental disconnection of the power cord and thereby prevent data loss or corruption. As is standard with such AC adapters, DC power cable 160 is provided with a male connector that is inserted into a corresponding female connector 100 and held in place by frictional forces only. Unfortunately, the frictional force is often insufficient to hold the two connectors in place, and if the unit is inadvertantly bumped or jossled, loss of power may result if the two connectors become disconnected from one another.

Shroud 30 also covers and protects a hardware reset switch 91 located on the rear of the housing.

Figs 4(a) and 4(b) are upper and lower left side perspective views of the cable shroud. Shroud 30 has a generally open cuboid form with four closed faces that define a cavity and two adjacent open faces. As can be seen in Fig 4(a), shroud 30 carries four hook members 110 that engage with corresponding slots in the rear face of the housing.

A key operated lock 35, that is supported on the unit 10, locks the cable shroud into position on the rear of the housing by moving a rotatable lock arm 120 (shown in Fig 2) into engagement with a longer hook member 130 that passes through a further slot 140 in the rear face of unit 10. When lock arm 120 is engaged with hook member 130, shroud 30 cannot be removed. A portion of the cavity is inset and provided with an opening through which the barrel of the lock protrudes when the shroud is fixed in place to allow access to the keyhole.

In this embodiment the lock system is the so called 'master pass key' lock system used for instance in the HP Vectra series of computers and described in the document "HP D6655A, HP 6659A Master Pass Key System User's Guide" available from Hewlett-Packard Company. This is a mechanism similar to a conventional key operated lock, except that two people are enabled to unlock the machine: the key owner and the system manager. The system manager can open all machines that he is responsible for using a programmable master key.

Lock arm 120 also serves to lock cover 50 in place by engaging with a suitably shaped projection 150 - shown in phantom in Fig 2- on the inside of cover 50. In this way, unauthorised removal of disk drive 60 is prevented.

Fig 4b illustrates how shroud 30 is shaped to prevent removal of DC power cord 160. Cord 160 is provided with a right angle male connector that is held in place in a female socket by a frictional force. Shroud 30 has an edge 170 that prevents the removal of the right angle connector from its socket when shroud 30 is fixed in place.

As can be seen in Fig 3, certain connectors such as connector 95 are located outside the cable shroud and are not protected by it. Such connectors would be, for instance, audio connectors that might require frequent connection and disconnection of headphones, microphones and the like according to the application for which the unit has been designed.

Fig. 5 shows disk drive unit 60, in a series of positions (a) to (d), being installed in the computer. As can be seen in Fig 5(a), unit 20 is provided with a U-shaped handle 180 with side arms pivotally mounted on respective opposing sides of unit 60. Handle 180 is lifted and pulled upwards in order to remove unit 60 from recess 40.

Recess 40 is provided with suitable shaped guiding and retaining pockets (not shown) on its oppositely facing inner walls. These pockets locate and retain a first end 190 of unit 60, the unit being provided with laterally extending mounting studs 200 for engaging the pockets and, once engaged, for enabling unit 60 to pivot and slide into the position shown in Fig. 5(c) which is its operational position.

The other end of unit 20 is provided with a connector (not shown in Fig 5) positioned to enable a flying lead to be conveniently connected manually to the unit with the studs 200 engaged in the pockets and the unit not fully pivoted into its operational position. This intermediate position is generally shown in Fig. 5(b).

The removable unit 60 comprises a mounting tray within which a hard disk drive of standard 3.5' form factor is shock mounted so as to present its electrical connector at an opening in one end of the tray, the mounting studs 200 and handle 180 being provided on the mounting tray.

Although a specific embodiment of the invention has been described, the invention is not to be limited to the specific arrangement so described. The invention is limited only by the claims. The claims themselves are intended to indicate the periphery of the claimed invention and are intended to be interpreted as broadly as the language itself allows, rather than being interpreted as claiming only the exemplary embodiment disclosed by the specification.

## Claims

1. An electronic appliance comprising:
a housing having at least one external socket,
and a cable shroud that is movable to and from a closed position in which closed position the cable shroud is disposed so as to prevent removal of a plug engaged in the socket, and a lock mechanism for locking the cable shroud in the closed position.

2. An electronic appliance as claimed in claim 1 wherein the housing comprises a recessed portion for receiving a removable device; and a movable closure member for enclosing the recessed portion, wherein the lock mechanism is operable to prevent movement of the closure member to a position in which the removable device can be removed from the recessed portion.

3. An electronic apparatus as claimed in claim 2 wherein the closure member is a sliding cover, the lock mechanism comprising a lock member movable to and from a lock position in which the lock member prevents sliding of the cover.

4. An electronic appliance as claimed in any preceding claim wherein the lock mechanism is key operated.

5. An electronic appliance as claimed in any preceding claim wherein the cable shroud is a one-piece part of plastics material and comprises a plurality of rigid walls defining a cavity, and at least one opening for allowing a plurality of cables to exit the cavity.

6. An electronic appliance as claimed in any preceding claim wherein the housing encloses one or more electronic components and is sealed by tamper evident seals.

7. An electronic appliance as claimed in any preceding clain wherein at least one said external socket is for a plug and play-type bus connection to an external peripheral device.

8. An electronic apparatus as claimed in any preceding claim comprising an external power adapter wherein at least one said external socket is for receiving a cable from said external adapter for powering the appliance.

9. An electronic appliance as claimed in any preceding claim wherein the cable shroud comprises hook members for engaging corresponding slots provided to the rear of the housing.

10. An electronic appliance as claimed in any preceding claim in the form of a personal computer.
